# EUROPÄISCHE PATENTSCHRIFT

(11) **EP 2 955 525 B1**
(45) Veröffentlichungstag und Bekanntmachung des Hinweises auf die Patenterteilung: **13.05.2020**
(21) Anmeldenummer: 14171721.5
(22) Anmeldetag: 10.06.2014
(51) Int. Cl.: G01N 35/00, G01N 35/10, B01L 9/00, B01L 3/02

(54) **Halterung für eine Pipettiervorrichtung für ein automatisches Analysegerät**
Holder for a pipetting device for an automatic analysis device
Crochet pour un dispositif de pipetage pour un appareil d'analyse automatique

(43) Veröffentlichungstag der Anmeldung: 16.12.2015
(73) Patentinhaber: Siemens Healthcare Diagnostics Products GmbH, 35041 Marburg (DE)
(72) Erfinder: Ziechner, Eike, 61273 Wehrheim (DE)

(56) Entgegenhaltungen:
- EP-A1- 1 767 950
- EP-A2- 2 420 848
- US-A- 5 314 825
- US-A1- 2007 015 276
- US-B1- 6 360 794

## Beschreibung

Die Erfindung betrifft ein Pipettiersystem für ein automatisches Analysegerät, umfassend eine Pipettiervorrichtung sowie eine Halterung dafür. Sie betrifft weiter ein Verfahren zur Justage eines der Pipettiervorrichtung zugeordneten Justagepunktes in einem automatischen Analysegerät.

Zahlreiche Nachweis- und Analyseverfahren zur Bestimmung physiologischer Parameter in Körperflüssigkeitsproben oder anderen biologischen Proben werden automatisiert in großer Anzahl in entsprechenden automatischen Analysegeräten durchgeführt. Heutige Analysegeräte sind in der Lage, eine Vielzahl von Nachweisreaktionen und Analysen mit einer Probe durchzuführen. Um eine Vielzahl von Untersuchungen automatisiert durchführen zu können, ist es an einer Vielzahl von Stellen erforderlich, durch automatisiertes Pipettieren kleine Flüssigkeitsmengen zu transferieren. So müssen beispielsweise Aliquots der Probenflüssigkeiten aus den Probengefäßen oder genau vorgegebene Teilmengen von Reagenzien aus den Reagenzbehältern entnommen und in das für die jeweilige Untersuchung bestimmte Reaktionsgefäß transferiert werden. Hierfür sind je nach Einsatzzweck mehrere entsprechende Pipettiersysteme in dem Analysegerät vorgesehen.

Ein derartiges Pipettiersystem weist üblicherweise an einem aktiv beweglichen Element, wie z. B. einem Transportarm, eine Pipettiernadel auf, die an einer Nadelhalterung am Transportarm befestigt ist. Die Pipettiernadel ist als Hohlnadel ausgestaltet, die automatisiert definierte Probenmengen aufnehmen und abgeben kann. Die Pipettiernadel wird üblicherweise entlang der Mittelachse eines Gefäßes eingeführt, durchsticht bei verschlossenen Gefäßen gegebenenfalls einen elastischen Verschlussstopfen und wird in die Flüssigkeit eingetaucht. Das Eintauchen wird mittels eines entsprechenden Sensors registriert und die vorgegebene Flüssigkeitsmenge druckgesteuert eingesaugt. Die entnommene Menge wird dann der entsprechenden Analyse zugeführt. Anschließend wird die Pipettiernadel in einer entsprechenden Einrichtung gespült und ist für den nächsten Einsatz bereit.

Kommt es während des Betriebs des Pipettiersystems zu einem Fehler hinsichtlich der Positionierung, kann es zu unvorhergesehenen Berührungen, d. h. einem Crash kommen. Selbst eine leichte Berührung kann schon Fehler bei der Eintauchregistrierung verursachen. Auf Grund der teilweise hohen wirkenden Kräfte können aber auch Beschädigungen der Nadel oder des berührten Gegenstandes entstehen, oder aber es kann zu einer Verschleppung von Probenmaterial und damit einer Verfälschung von Testergebnissen kommen. Daher ist es erforderlich, derartige Crashs unbedingt zu vermeiden. Gerade aufgrund der kleinen Durchmesser der Öffnungen der verwendeten Gefäße von einigen Millimetern ist dies nur durch eine exakte Justage der Gefäßpositionen und der Pipettiernadel zu gewährleisten.

Dokumente US 6 360 794 B1, EP 2 420 848 A2 und EP 1 767 950 A1 beschreiben bekannte Pipettiersysteme für Analysegeräte.

Problematisch ist, dass die Pipettiernadel ein Verschleißteil darstellt, das regelmäßig ausgetauscht werden muss. Insbesondere das häufige Durchstechen von Gefäßverschlüssen führt zu Metallabrieb und Verbiegung der Nadel. Bei einem Austausch der Nadel hat die neue Nadelspitze jedoch eine andere Position im Raum, und es besteht die Gefahr, dass die Nadelspitze so weit von der Sollposition abweicht, dass die kleinen Öffnungen der Gefäße nicht mehr getroffen werden. Hierfür genügt schon eine Abweichung um wenige Millimeter.

Bislang ist der Austausch einer Pipettiernadel daher typischerweise mit einer umfangreichen Neujustierung verbunden. Mit Lehren wird die neue Pipettiernadel von Hand eingestellt, und durch umfangreiche Tests wird die Einstellung überprüft. Hierfür wurden einstellbare Nadeln entwickelt, die mittels Keillagerungen befestigt sind. Jeweils rechts und links der Nadel wird je eine Keillagerung angebracht, wobei der Keil der Nadel einen kleineren Keilwinkel besitzt als der Wiederlagerkeil der Nadelhalterung. Somit ist nur eine Linienauflage rechts und links vorhanden. Diese ist zum einen nicht genau in der Höhe zu vermessen, andererseits ermöglicht sie noch eine Kippbewegung der Nadel. Diese Kippbewegung wird mittels Madenschrauben räumlich justiert. Nach der Justage werden die Madenschrauben mit Schraubenlack versiegelt. Teilweise werden Pipettiernadeln auch per Augenmaß eingestellt, wobei als Orientierung Streben des Rahmens oder andere gerade Gehäuseteile dienen. Das Lot muss dabei immer in zwei Richtungen pro Nadel ermittelt werden. Ein derartiges Verfahren ist jedoch einerseits fehleranfällig, andererseits aufwändig, da es typischerweise nicht durch den Benutzer selbst durchgeführt werden kann, sondern ein speziell geschulter Servicetechniker den Austausch der Pipettiernadel durchführen muss. Weiterhin ist die Lagerung nicht sonderlich stabil und kann keine großen Kräfte aufnehmen, so dass ein Herausrutschen der Nadel im Betrieb nicht ausgeschlossen ist und eine noch häufigere Justage erforderlich macht.

Es ist daher Aufgabe der Erfindung, eine Pipettiervorrichtung und eine Halterung dafür bereit zu stellen, die besonders stabil sind und einen einfachen, fehlerunanfälligen und Justage-freien Austausch der Pipettiernadel ermöglichen und damit einen besonders zuverlässigen Betrieb eines Analysegeräts erlauben.

Diese Aufgabe wird erfindungsgemäß mittels der Gegenstände der unabhängigen Ansprüche gelöst.

Bezüglich der Pipettiernadel wird diese Aufgabe dadurch gelöst, dass um einen axialen Bereich des Nadelkörpers ein Befestigungskörper angeordnet ist, der der Befestigung der Pipettiernadel an einer Nadelhalterung dient und wobei der Befestigungskörper im Wesentlichen als Kegelstumpf ausgestaltet ist, dessen Spitze in der Achse des Nadelkörpers liegt.

Bezüglich der Nadelhalterung wird die Aufgabe gelöst, indem diese einen im Wesentlichen als Kegelstumpf ausgestalteten Hohlraum aufweist, dessen gedachte Spitze in der Mittelachse der Durchtrittsöffnung der Halterung für den Nadelkörper liegt.

Dies hat den Vorteil, dass nach dem Austausch einer Pipettiernadel dieselbe Position der Nadel wiederhergestellt ist, weil nur eine einzige, exakte Lage der Nadel möglich ist.

Dies ist auf Basis einer konischen Halterung möglich. Hierzu weist die Nadelhalterung einen Hohlraum auf, der konisch, d. h. kegel- oder kegelstumpfförmig ausgestaltet ist. In der Spitze des Kegelstumpfes liegt dabei die Durchtrittsöffnung für die Nadel. An der Nadel ist ein dem Hohlraum exakt angeformter und damit ebenfalls konischer Befestigungskörper vorgesehen. Die Nadel wird bei der Montage in die Öffnung eingeführt und der Befestigungskörper als Innenkonus fügt sich exakt in den Hohlraum ein und wird so fixiert.

Gegenstand der vorliegenden Erfindung ist eine Halterung für eine Pipettiervorrichtung. Die Halterung umfasst dazu eine Öffnung für den Nadelkörper und weist einen im Wesentlichen als Kegelstumpf ausgestalteten Hohlraum auf, dessen gedachte Spitze in der Mittelachse der Öffnung liegt.

Entsprechend ist auch der Hohlraum in der Halterung vorteilhafterweise als grader Kreiskegelstumpf ausgestaltet.

Die Pipettiervorrichtung umfasst einen im Wesentlichen hohlzylindrischen Nadelkörper und einen um einen axialen Bereich des Nadelkörpers angeordneten Befestigungskörper zur Befestigung des Nadelkörpers an einer Halterung des automatischen Analysegeräts. Der Befestigungskörper ist im Wesentlichen als Kegelstumpf ausgestaltet, dessen gedachte Spitze in der Achse des hohlzylindrischen Nadelkörpers liegt.

Vorteilhafterweise ist der Befestigungskörper als grader Kreiskegelstumpf ausgestaltet.

Grundsätzlich garantiert jede Kegelform eine passgenaue Lage von Nadel und Nadelhalterung. Beispielsweise kann der Kegel als Grundfläche einen Kreis, eine Ellipse, ein regelmäßiges oder unregelmäßiges Polygon, beispielsweise ein Dreieck, ein Viereck, ein Fünfeck, ein Sechseck, ein Siebeneck, ein Achteck oder ein Neuneck aufweisen. In anderen Ausführungsformen kann der Kegel als Grundfläche einen Stern, beispielsweise mit spitzen und/oder gerundeten Ecken aufweisen, oder die Grundfläche kann von einer beliebigen, ebenen, geschlossenen Kurve begrenzt sein. Bei dem Kegel kann es sich um einen geraden Kegel oder um einen schiefen Kegel handeln. Bei dem Kegel kann es sich auch um einen Kegelstumpf handeln.

In einer bevorzugten Ausführungsform handelt es sich bei dem Kegel um einen geraden Kreiskegel. Ein gerader Kreiskegel ist ein Rotationskörper, was den Vorteil hat, dass er auf einer Drehmaschine leicht und mit besonders hoher Genauigkeit hergestellt werden kann. Abhängig von den Materialien und dem genauen Herstellungsverfahren sind in CNC-(Computerized Numerical Control-) Maschinen Genauigkeiten im Tausendstelbereich möglich. Damit ist mit einem geraden Kreiskegel als Passform eine besonders hohe Genauigkeit der Lage erreichbar. Die Toleranzen werden damit reduziert, so dass die eingangs beschriebenen Anforderungen an die räumliche Positionierung erfüllt sind. Der Öffnungswinkel des Konus sollte dabei so gewählt sein, dass die Selbsthemmung nicht zu groß ist, so dass der Innenkonus, d. h. der Befestigungskörper mit der Nadel leicht entfernt und gewechselt werden kann. Gleichzeitig sollte der Winkel aber auch so ausgelegt sein, dass die Selbsthemmung noch so groß ist, dass die Wiederpositionierung exakt gewährleistet ist und sich kein Spiel in der Nadelhalterung ergibt.

Der Konus der Halterung, der Innenkonus des Befestigungskörpers der Pipettiervorrichtung, die Lehre und die Nadel können beispielsweise aus Kunststoff, Metall, Glas, Stein, Holz oder anderen geeigneten Materialien oder Materialkombinationen gefertigt sein. Der Konus der Halterung und der Innenkonus des Befestigungskörpers der Pipettiervorrichtung können dabei aus dem geleichen Material oder unterschiedlichen Materialien gefertigt sein.

Bevorzugt sind sowohl der Konus der Halterung und als auch der Innenkonus des Befestigungskörpers der Pipettiervorrichtung aus Kunststoff gefertigt. In einer solchen Ausführung kann beispielsweise eine größere Selbsthemmung zwischen diesen Teilen nicht erwünscht sein, um beispielsweise den Innenkonus des Befestigungskörpers leichter aus dem Konus der Halterung entfernen zu können, was beispielsweise beim Tausch einer Lehre oder einer Pipettiernadel vorteilhaft sein kann.

Bevorzugt ist die Lehre oder die Nadel beispielsweise aus Metall, und der Innenkonus des Befestigungskörpers der Pipettiervorrichtung aus Kunststoff gefertigt. Bei einer solchen Ausführung kann beispielsweise eine größere Selbsthemmung zwischen Nadel und Innenkonus des Befestigungskörpers der Pipettiervorrichtung erwünscht sein, um eine festere und weniger leicht zu lösende Verbindung zwischen der Lehre oder der Nadel, und dem Innenkonus des Befestigungskörpers der Pipettiervorrichtung herzustellen.

Bezüglich des Befestigungskörpers ist der Durchmesser und/oder die Höhe des Kegelstumpfes vorteilhafterweise größer als der dreifache, vorzugsweise größer als der fünffache Durchmesser des Nadelkörpers. Hierdurch wird ein ausreichender Halt des Befestigungskörpers in der Halterung gewährleistet.

Der Befestigungskörper weist ein sich senkrecht zur Achse des hohlzylindrischen Nadelkörpers erstreckendes Halteelement auf, das vorzugsweise rechteckig oder als zylindrischer Haltestift ausgestaltet ist. Da es sich bei einem geraden Kreiskegel um einen Rotationskörper handelt, ist zwar eine Fixierung in axialer und radialer Richtung gegeben, nicht jedoch eine Fixierung in azimuthaler Richtung. Damit ist z. B. eine Anschliffkante der Spitze der Hohlnadel nicht fixiert. Dies wird durch ein sich senkrecht zur Achse des Nadelkörpers erstreckendes Halteelement gewährleistet.

Hierdurch kann beispielsweise die Ausrichtung einer Nadelöffnung und/oder einer Entlüftungsnut einer Nadel festgelegt werden, was beispielsweise beim Spülen der Nadel in einer Waschstation vorteilhaft sein kann, beispielsweise aufgrund einer speziellen Ausrichtung von Düsen in der Waschstation. Ferner kann die korrekte Ausrichtung der Nadelöffnung beispielsweise beim Abstreifen von Tropfen an einem Gefäßrand vorteilhaft sein.

Das Halteelement greift beim Einbau der Pipettiervorrichtung in die Halterung in eine Freimachung, die in die Mantelfläche des konischen Hohlraums eingebracht ist und die zur Aufnahme des Halteelements des Befestigungskörpers ausgestaltet ist. Hierdurch wird die exakte Fixierung auch in Umfangsrichtung erreicht. Vorteilhafterweise weist die Freimachung einen rechteckigen Querschnitt auf, oder sie ist als keilförmige Kerbe ausgestaltet, wobei die Spitze des Keils auf die Spitze des Kegels oder Kegelstumpfs hin gerichtet ist. Hierdurch wird einerseits der Einbau erleichtert, da die neue Nadel nicht sofort exakt ausgerichtet werden muss, sondern auch bei etwa genauer Ausrichtung automatisch durch die zulaufenden Kanten der Keilform in die richtige Position rutscht, andererseits wird auch die exakte Positionierung gewährleistet.

Die Halterung für die Pipettiervorrichtung weist in weiterer vorteilhafter Ausgestaltung ein Fixierungselement auf, welches zum Ausüben einer Kraft in Richtung der Öffnung für die Nadel ausgebildet ist und im Bereich der Grundfläche des konischen Hohlraums angeordnet ist. Als Fixierungselemente sind Schrauben, Bügel und vielfältige andere Anordnungen geeignet, denen letztlich gemein ist, dass sie den kegelstumpfförmigen Befestigungskörper mit der Nadel in axialer Richtung in den Hohlraum drücken und somit dort fixieren.

Ein weiterer Gegenstand der vorliegenden Erfindung ist ein Pipettiersystem, das eine erfindungsgemäße Pipettiervorrichtung und eine erfindungsgemäße Halterung für die Pipettiervorrichtung umfasst.

Noch ein weiterer Gegenstand der vorliegenden Erfindung ist ein automatisches Analysegerät, das ein erfindungsgemäßes Pipettiersystem umfasst.
Vorteilhafterweise umfasst ein erfindungsgemäßes Analysegerät einen Kontaktkörper zur Justage eines zugeordneten Justagepunktes, wobei der Kontaktkörper zwei bezüglich einer durch den Justagepunkt führenden Spiegelachse spiegelsymmetrischen Kanten aufweist.

Vorteilhafterweise sind die Kanten des Kontaktkörpers nicht parallel zueinander.

In einer weiteren Ausführungsform des Analysegeräts ist der Kontaktkörper als Waschstation für den Nadelkörper der Pipettiervorrichtung ausgestaltet.

Die Erfindung betrifft ferner die Verwendung einer Pipettiervorrichtung eines erfindungsgemäßen Pipettiersystems zur Justage eines der Pipettiervorrichtung zugeordneten Justagepunktes oder zur Positionierung eines Kontaktkörpers mittels eines dem Kontaktkörper zugeordneten Justagepunktes in einem automatischen Analysegerät.

Die beschriebene exakte Fixierung der Nadel in der Nadelhalterung ermöglicht es, sowohl die nötige Grundjustage der Nadelhalterung als auch die Justage von Anfahrstationen der Nadel, wie z. B. Halterungen von Blutentnahmeröhrchen, Nadelwaschstation etc. (zumindest teilweise) automatisiert mit der Nadel selbst durchzuführen. Durch die exakte Positionierung der Nadel kann deren Spitze als Justagemarke dienen. Dies kann sowohl bei der Erstmontage des automatischen Analysegeräts durchgeführt werden, als auch beim späteren Austausch der genannten Anfahrstationen. Hierfür ist es nötig, die genauen Koordinaten der jeweiligen Justagepunkte genau ermitteln zu können und in einer Steuereinrichtung des Analysegeräts speichern zu können.

Bei der Verwendung einer Pipettiervorrichtung zur Justage eines der Pipettiernadel zugeordneten Justagepunktes in einem beschriebenen Analysegerät wird daher zur Ermittlung einer ersten Koordinate des Justagepunktes vorteilhafterweise ein Kontaktkörper mit zwei bezüglich einer durch den Justagepunkt führenden Spiegelachse spiegelsymmetrischen Kanten angeordnet, die Pipettiernadel senkrecht zur Spiegelachse an die beiden Kanten bewegt, die jeweiligen Kontaktpunkte ermittelt, und die erste Koordinate als Mittelpunkt zwischen den beiden Kontaktpunkten ermittelt. Ein derartiger Kontaktkörper mit zwei Kanten kann beispielsweise eine auf einer Nadelwaschstation in der Art einer Schablone angeordnete Öffnung sein. Durch die Bewegung an die gegenüberliegenden inneren Kanten kann mit einer Bewegung in einer Dimension die erste Koordinate als Mittelpunkt des Verfahrweges zwischen den Kanten ermittelt werden.

In weiterer vorteilhafter Ausgestaltung der Verwendung einer Pipettiervorrichtung sind die Kanten des Kontaktkörpers nicht parallel zueinander und die zweite Koordinate wird aus der Geometrie der Kanten und dem Abstand zwischen den beiden Kontaktpunkten ermittelt. Sind die beiden Kanten nämlich nicht parallel zueinander, ergibt sich zusammen mit dem genannten Erfordernis der Spiegelsymmetrie ein gleichschenkliges Dreieck (je nach Länge der Schenkel und der exakten Form des Kontaktkörpers evtl. verkürzt auf eine Trapezform). In dieser Form schneidet die Spiegelachse den ersten Koordinatenpunkt des Kontaktpunktes. Die erste Koordinate ist also ermittelbar. Zusätzlich ist jedoch jeder Position auf der Spiegelachse auch ein Abstand zwischen den Kanten und damit ein Verfahrweg senkrecht zur Spiegelachse zugeordnet. Ist der Steuereinrichtung die Geometrie des Kontaktkörpers bekannt, können mit nur einer Bewegung von einer Kante zur gegenüberliegenden Kante beide Koordinaten ermittelt werden, nämlich die erste Koordinate als Mitte zwischen den Endpositionen und die zweite Koordinate aus der Länge des Verfahrweges zwischen den Endpositionen und der Geometrie des Kontaktkörpers.

Während des Justageprozesses kann ein Messzylinder anstelle der Pipettiernadel verwendet werden. Ein separater Messzylinder für die Justage, der eine identische Befestigungsvorrichtung wie die Nadel hat und dessen Spitze an derselben Position wie die der Nadel liegt, hat den Vorteil, dass er für die Justage optimiert ausgebildet werden kann und dadurch den Justageprozess genauer macht.

Beispielsweise kann ein Messzylinder mit größerem Durchmesser und massiv ausgebildet sein, so dass er kaum elastisches Verhalten beim Berühren eines Kontaktpunktes zeigt, wie dies bei einer Hohlnadel der Fall sein könnte. Weiterhin kann der Messzylinder hinsichtlich der Toleranzen besonders exakt gearbeitet sein, so dass die Genauigkeit der Positionsbestimmung noch weiter verbessert wird.

Die mit der Erfindung erzielten Vorteile bestehen insbesondere darin, dass durch die Verwendung eines auf einer konischen Form basierenden Befestigungskörpers eine exakte Wiederholbarkeit der Position einer Hohlnadel in einem Analysegerät beim Austausch der Pipettiervorrichtung gewährleistet wird, so dass eine erneute Justage nach dem Austausch nicht mehr erforderlich ist. Es genügt eine einmalige Justage ab Werk, alle weiteren Ungenauigkeiten entstehen nur noch durch die Toleranzen der Nadel selbst und zum Nadelhalter. Diese sind durch einen genauen Fertigungs- und Qualitätsprozess sicherzustellen. Damit ist es auch möglich, die Nadel selbst als Messdorn zu nutzen, um andere Module, wie z. B. eine Waschstation für die Pipettiernadel, selbst zu justieren.

Vorteilhafterweise ist der Kontaktkörper zur Justage eines zugeordneten Justagepunktes als Waschstation für eine Pipettiernadel ausgestaltet oder mit einer Waschstation für eine Pipettiernadel verbunden oder in eine Waschstation für eine Pipettiernadel integriert.

Die Justage der Pipettiernadel kann so vorteilhafterweise direkt vor, während und/oder nach einem Waschvorgang erfolgen. Dabei ist besonders vorteilhaft, dass keine zusätzlichen und damit zeitaufwändigen Verfahrwege zur Positionsbestimmung der Pipettiernadel zurückgelegt werden müssen, wodurch der Probendurchsatz eines Analysegerätes erheblich gesteigert werden kann.

Die Erfindung wird anhand einer Zeichnung näher erläutert. Darin zeigen:
- FIG 1: eine Schnittzeichnung einer Pipettiervorrichtung für ein automatisches Analysegerät,
- FIG 2: eine Aufsicht der Pipettiervorrichtung,
- FIG 3: eine Schnittzeichnung einer Halterung für eine Pipettiervorrichtung,
- FIG 4: eine Aufsicht der Halterung,
- FIG 5: eine seitliche Ansicht der Halterung,
- FIG 6: eine Ansicht eines Messzylinders
- FIG 7: ein Ablaufdiagramm für ein erstes Justageverfahren,
- FIG 8: eine schematische Darstellung eines Messdreiecks, und
- FIG 9: ein Ablaufdiagramm für ein zweites Justageverfahren.

Gleiche Teile sind in allen Figuren mit denselben Bezugszeichen versehen.

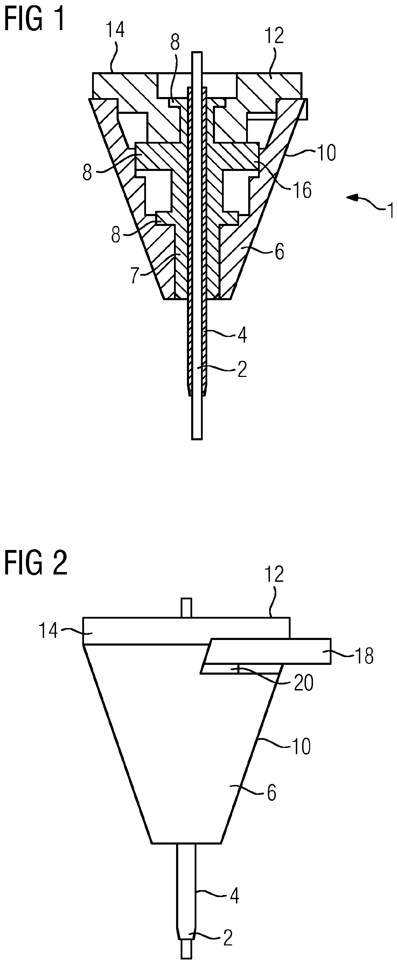

FIG 1 zeigt eine Schnittzeichnung einer Pipettiervorrichtung 1. Die Pipettiervorrichtung 1 umfasst einen metallischen, hohlzylindrischen Nadelkörper 2, der ausgehend von der nicht gezeigten Nadelspitze einen konstanten Außendurchmesser aufweist und in dem in FIG 1 gezeigten Bereich eine Verdickung 4 aufweist. An dem der Nadelspitze entgegengesetzten Ende liegt der Nadelkörper 2 frei, so dass hier ein Schlauch angeschlossen werden kann, der einen Betrieb der Pipettiervorrichtung 1 in einem automatischen Analysegerät durch Druck oder Unterdruck mit und ohne Steuerflüssigkeiten erlaubt, so dass - von einer Steuereinrichtung gesteuert - automatisiert definierte Probenmengen aufgenommen und abgegeben werden können.

Die Pipettiervorrichtung 1 wird dazu entlang der Mittelachse des jeweiligen Gefäßes eingeführt, durchsticht bei verschlossenen Gefäßen gegebenenfalls einen elastischen Verschlussstopfen und wird in die Flüssigkeit eingetaucht. Das Eintauchen wird mittels eines Eintauchsensors registriert und die vorgegebene Menge druckgesteuert eingesaugt. Die entnommene Menge wird dann der entsprechenden Analyse zugeführt. Anschließend wird der Nadelkörper 2 in einer Waschstation gespült und ist für den nächsten Einsatz bereit.

Die Pipettiervorrichtung 1 weist um die Mittelachse des Nadelkörpers 2 herum im Bereich der Verdickung 4 einen dreiteiligen Befestigungskörper 6 auf. Der Befestigungskörper 6 besteht hier aus einem fest mit dem Nadelkörper 2 verbundenen Innenteil 7, einem Außenteil 10 und einem Grundflächenteil 12. Das Innenteil 7 umfasst einen den Nadelkörper 2 umschließenden hohlzylindrischen Körper und von diesem konzentrisch ausgehende Scheiben 8 verschiedener Radien und mit teilweise abgeschrägten Kanten mit verschiedenen Anschrägungswinkeln. Diese werden im Detail nicht beschrieben, da sie im Wesentlichen nur dazu dienen, eine formschlüssige Verbindung des Nadelkörpers mit dem Außenteil 10 und dem Grundflächenteil 12 des Befestigungskörpers 6 zu gewährleisten.

Das Außenteil 10 des Befestigungskörpers 6 weist die Außenform eines geraden Kreiskegelstumpfs auf. Es ist durch Drehen hergestellt. Die Mittelachse des Außenteils 10 entspricht der Mittelachse des Nadelkörpers 2, die fiktive Spitze des Kegels weist zur Spitze des Nadelkörpers 2. Die Grundfläche des Kreiskegelstumpfs wird von dem Grundflächenteil 12 des Befestigungskörpers 6 gebildet, welches eine die Grundfläche bildende Kreisscheibe 14 und rotationssymmetrische Aufbauten 16 umfasst, die wiederum zur formschlüssigen Verbindung mit dem Innenteil 7 dienen.

Zusätzlich weist das Grundflächenteil 12 des Befestigungskörpers 6 noch ein Halteelement 18 auf, das in FIG 2, der Aufsicht der Pipettiervorrichtung 1 aus FIG 1 deutlich dargestellt ist. Das Halteelement 18 hat eine Quaderform und erstreckt sich unter Durchbrechung der Rotationssymmetrie senkrecht zur Mittelachse des Nadelkörpers 2 durch eine Unterbrechung 20 des Außenteils 10 nach außen. Wesentlich für den Halt der Pipettiervorrichtung 1 in einer Halterung ist die konische Außenform des Befestigungskörpers 6 und des Halteelements 18.

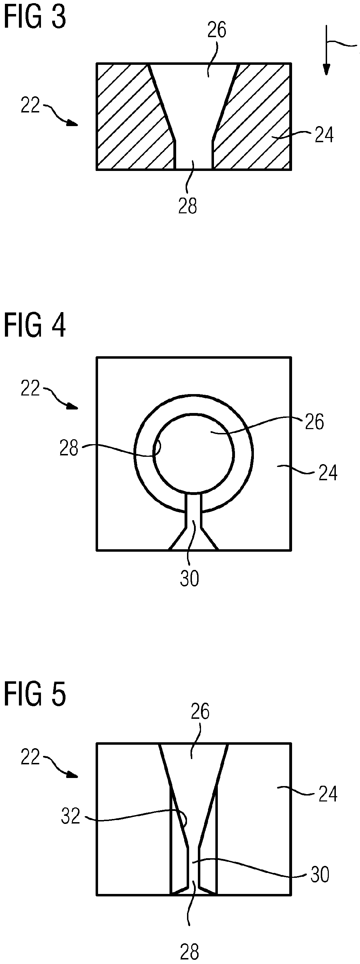

Die Halterung 22, in der die Pipettiervorrichtung 1 an einem beweglichen Arm des automatischen Analysegeräts fixiert wird, ist in den FIG 3 bis 5 dargestellt. FIG 3 zeigt eine seitliche Schnittzeichnung der Halterung 22. Die Halterung 22 umfasst im Wesentlichen einen quaderförmigen Block 24 mit quadratischer Grundfläche. In den Block ist ein Hohlraum 26 eingebracht, der der Außenform des Befestigungskörpers 6 angepasst ist und eine identische Kegelform aufweist, allerdings im Negativ. Mit anderen Worten: In die Oberseite des Blocks 24 ist eine kreisförmige Öffnung eingebracht, die die Grundfläche des Kegelstumpfs bildet. Ausgehend von der Öffnung verjüngt sich der Hohlraum 26 in den Block 24 hinein und bildet so einen Kegelstumpf. Daran schließt sich konzentrisch eine zylinderförmige Öffnung 28 bis zur gegenüberliegenden Seite des Blockes 24 an.

Die Halterung 22 ist in FIG 4 in Aufsicht aus der in FIG 3 gezeigten Richtung A gezeigt. Hier ist gezeigt, dass der Block 24 einen sich über seine gesamte Höhe erstreckenden geraden Spalt 30 aufweist, der es ermöglicht, die Pipettiervorrichtung 1 seitlich einzuführen.

FIG 5 zeigt schließlich eine seitliche Ansicht der Halterung 22. Durch die konische Form des Hohlraums 26 in der Mitte des Blocks 24 bildet der Spalt 30 am oberen Ende eine Freimachung 32, die sich keilförmig zusammen mit dem Hohlraum 26 verjüngt.

Die Fixierung der Pipettiervorrichtung 1 in der Halterung 22 erfolgt derart, dass der Nadelkörper 2 der Pipettiervorrichtung 1 seitlich durch den Spalt 30 in die Halterung 22 eingeführt wird, so dass dessen Mittelachse in etwa in der Mittelachse des Hohlraums 26 liegt. Anschließend wird die Pipettiernadel nach unten geführt, so dass der Befestigungskörper 6 in den Hohlraum 26 und das Halteelement 18 in die Freimachung 32 geführt wird. Durch die Passgenauigkeit von Hohlraum 26, Befestigungskörper 6 bzw. Freimachung 32 und Halteelement 18 wird eine Fixierung der Pipettiervorrichtung 1 erreicht, die auch bei einem Austausch eine wiederholbar genaue Positionierung ermöglicht.

Durch ein nicht näher gezeigtes lösbares Fixierungselement, das eine Kraft in Richtung der Nadelspitze auf den Befestigungskörper 6 ausübt und im Bereich der Kreisscheibe 14 angeordnet ist, beispielsweise Schrauben oder ein Haltebügel, wird die Pipettiervorrichtung 1 in der Halterung 22 endgültig fixiert.

Die wiederholbare, genaue Fixierung der Pipettiervorrichtung 1 macht es möglich, dass nur noch eine einzige werkseitige Justage der Pipettiervorrichtung 1 bzw. der Halterung 22 notwendig ist. Bei einem nachfolgenden Austausch der Pipettiervorrichtung 1 ist die exakte Positionierung der Austauschnadel durch die beschriebene Form gewährleistet.

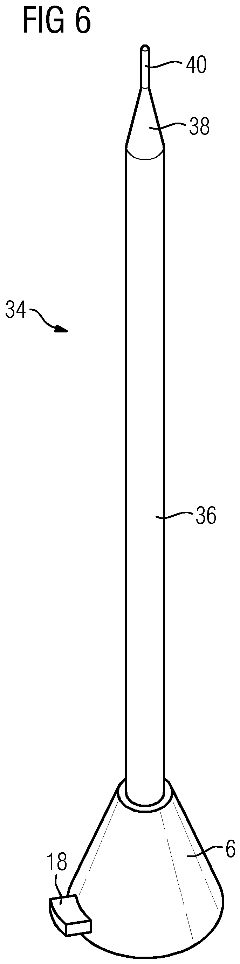

Vorteilhafterweise erfolgt die Justage der Halterung 22 mittels eines Messzylinders 34, der während der Justage anstatt der Pipettiervorrichtung 1 in die Halterung 22 eingesetzt wird und der in FIG 6 in einer Ansicht gezeigt ist, analog der Justage der Pipettiervorrichtung 1.

Der Messzylinder 34 weist entsprechend einen Befestigungskörper 6 und ein Halteelement 18 auf. Anstatt des Nadelkörpers 2 weist er jedoch einen massiven, dickeren Zylinderkörper 36 auf, der einen konischen Abschluss 38 mit einer dünnen Messspitze 40 aufweist. Der Messzylinder 34 ist verwindungssteif und besonders exakt mit hoher Präzision gefertigt. Dadurch eignet er sich für eine besonders genaue Justage.

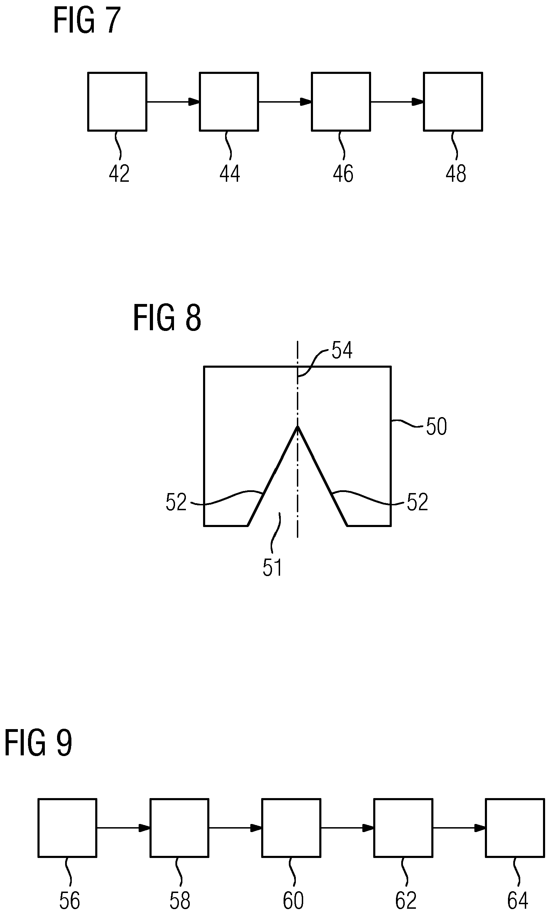

Eine Justage der Pipettiervorrichtung 1 erfolgt nach dem in FIG 7 schematisch dargestellten Verfahren. Grundlage ist ein Bauteil, beispielsweise ein Niederhalter für einen Deckel eines Blutentnahmeröhrchens, welches zwei symmetrische Kanten aufweist. Der automatisiert bewegbare Arm, an dem die Pipettiervorrichtung 1 mittels einer Halterung 22 fixiert ist, fährt in Schritt 42 zunächst aus einer ersten Richtung, beispielsweise von links mit der Pipettiervorrichtung 1 an die erste Kante des Niederhalters, bis ein Kontakt festgestellt wird. Die Position wird gespeichert. In Schritt 44 fährt die Pipettiervorrichtung 1 nach oben, dann auf die andere Seite des Niederhalters und dort wieder nach unten. In Schritt 46 fährt die Pipettiervorrichtung 1 aus der gegenüberliegenden Richtung, hier also von rechts, gegen zweite Kante, bis ein Kontakt festgestellt wird. Auch diese Position wird gespeichert. In Schritt 48 wird aus der Mittelposition zwischen den gespeicherten Positionen eine erste Koordinate des Mittelpunkts als Justagepunkt ermittelt.

Für eine dazu senkrechte Raumrichtung kann dasselbe Verfahren angewandt werden. Zudem können Lichtspalte rechts und links der Pipettiervorrichtung 1 zur manuellen, optischen Justage eingesetzt werden. In jedem Fall ist die Position der Pipettiervorrichtung 1 bekannt und kann zur Justage anderer Bauteile, wie z. B. der Waschstation, eingesetzt werden, wie im Folgenden beschrieben wird.

Möglichst mittig über der Eintrittsöffnung der Waschstation oder einer beliebigen anderen Station, in die die Pipettiernadel eintaucht, ist ein Kontaktkörper 50 angeordnet, der in FIG 8 dargestellt ist. Dieser weist eine keilförmige Ausbuchtung 51 mit zwei Kanten 52 auf, die ein gleichschenkliges Dreieck bilden. Der Kontaktkörper 50 ist bezüglich einer Spiegelachse 54 symmetrisch.

Das Justageverfahren ist schematisch in FIG 9 dargestellt. Die Pipettiervorrichtung 1 fährt in die dreieckige Ausbuchtung 51. In Schritt 56 wird sie senkrecht zur Spiegelachse 54 an die erste Kante 52 geführt, anschließend in Schritt 58 in entgegengesetzter Richtung an die zweite Kante 54. Wie schon in dem Verfahren nach FIG 7 lässt sich in Schritt 60 aus dem Mittelwert aufgrund der Symmetrie die erste Koordinate des Mittelpunkts ermitteln, d. h. die Lage der Spiegelachse 54.

Der Steuereinrichtung ist die Geometrie des Kontaktkörpers 50 bekannt. Mit dem Winkel des Dreiecks, dem Durchmesser der Pipettiervorrichtung 1 und der Länge des Verfahrweges zwischen den beiden Kanten 52 ermittelt die Steuereinrichtung nun auch die Lage auf der Mittelachse, d. h. die Koordinate senkrecht zur ersten Koordinate. Mit nur einem Verfahrweg lassen sich so zwei Koordinaten ermitteln. Die Waschstation wird in Schritt 64 nun bei einer Abweichung entsprechend verschoben und das Verfahren wiederholt, bis die Waschstation exakt positioniert ist. Der Wert der Position wird gespeichert.

Bei Justage der Halterung 22 mittels des Messzylinders 34 wird nach Justage aller Positionen der Messzylinder 34 durch die Pipettiervorrichtung 1 ersetzt. Das Verfahren kann auch dazu genutzt werden, während des Betriebs des automatischen Analysegeräts eine Prüfung der Justage durchzuführen. Auch kann der Abnutzungszustand der Pipettiervorrichtung 1 durch große Justageabweichungen so erkannt werden.

### Bezugszeichenliste

- 1: Pipettiervorrichtung
- 2: Nadelkörper
- 4: Verdickung
- 6: Befestigungskörper
- 7: Innenteil
- 8: Scheibe
- 10: Außenteil
- 12: Grundflächenteil
- 14: Kreisscheibe
- 16: Aufbauten
- 18: Halteelement
- 20: Unterbrechung
- 22: Halterung
- 24: Block
- 26: Hohlraum
- 28: Öffnung
- 30: Spalt
- 32: Freimachung
- 34: Messzylinder
- 36: Zylinderkörper
- 38: Abschluss
- 40: Messspitze
- 42, 44, 46 48: Schritt
- 50: Kontaktkörper
- 51: Ausbuchtung
- 52: Kante
- 54: Spiegelachse
- 56, 58, 60 62, 64: Schritt

- A: Richtung

## Patentansprüche

1. Halterung (22) für eine Pipettiervorrichtung (1) für ein automatisches Analysegerät, die Pipettiervorrichtung (1) umfassend einen hohlzylindrischen Nadelkörper (2) und einen um einen axialen Bereich des Nadelkörpers (2) angeordneten Befestigungskörper (6) zur Befestigung des Nadelkörpers (2) an der Halterung (22) des automatischen Analysegeräts, wobei der Befestigungskörper (6) als Kegelstumpf ausgestaltet ist, dessen gedachte Spitze in der Achse des hohlzylindrischen Nadelkörpers (2) liegt, wobei der Befestigungskörper (6) ein sich senkrecht zur Achse des hohlzylindrischen Nadelkörpers (2) erstreckendes Halteelement (18) zur Vermeidung einer Verdrehung des hohlzylindrischen Nadelkörpers (2) um die Nadelkörperachse aufweist, die Halterung (22) umfassend eine Öffnung (28) für den Nadelkörper (2), **dadurch gekennzeichnet, dass** die Halterung (22) einen als Kegelstumpf ausgestalteten Hohlraum (26) aufweist, dessen gedachte Spitze in der Mittelachse der Öffnung (28) liegt, wobei an einer Mantelfläche des Hohlraums (26) eine Freimachung (32) eingebracht ist, die zur Aufnahme des Halteelements (18) ausgestaltet ist.

2. Halterung (22) nach Anspruch 1, bei der die Freimachung (32) keilförmig ausgestaltet ist.

3. Halterung (22) nach einem der Ansprüche 1 oder 2 mit einem Fixierungselement, ausgebildet zum Ausüben einer Kraft in Richtung der Öffnung (28)für die Nadel, wobei das Fixierungselement im Bereich der Grundfläche des konischen Hohlraums (26) angeordnet ist und den kegelstumpfförmigen Befestigungskörper (6) mit der Nadel in axialer Richtung in den Hohlraum (26) drückt und somit dort fixiert.

4. Pipettiersystem umfassend eine Halterung (22) nach einem der Ansprüche 1 bis 3 und eine Pipettiervorrichtung (1) für ein automatisches Analysegerät, die Pipettiervorrichtung (1) umfassend einen hohlzylindrischen Nadelkörper (2) und einen um einen axialen Bereich des Nadelkörpers (2) angeordneten Befestigungskörper (6) zur Befestigung des Nadelkörpers (2) an einer Halterung (22) des automatischen Analysegeräts, wobei der Befestigungskörper (6) als Kegelstumpf ausgestaltet ist, dessen gedachte Spitze in der Achse des hohlzylindrischen Nadelkörpers (2) liegt, wobei der Befestigungskörper (6) ein sich senkrecht zur Achse des hohlzylindrischen Nadelkörpers (2) erstreckendes Halteelement (18) zur Vermeidung einer Verdrehung des hohlzylindrischen Nadelkörpers (2) um die Nadelkörperachse aufweist.

5. Pipettiersystem nach Anspruch 4, bei der der Durchmesser und/öder die Höhe des Kegelstumpfes der Pipettiervorrichtung (1) größer als der dreifache, vorzugsweise größer als der fünffache Durchmesser des Nadelkörpers (2) ist.

6. Automatisches Analysegerät mit einem Pipettiersystem nach einem der Ansprüche 4 oder 5 oder einer Halterung (22) nach einem der Ansprüche 1 bis 3.

7. Automatisches Analysegerät gemäß Anspruch 6 ferner umfassend einen Kontaktkörper (50) zur Justage eines zugeordneten Justagepunktes, wobei der Kontaktkörper (50) zwei bezüglich einer durch den Justagepunkt führenden Spiegelachse (54) spiegelsymmetrischen Kanten (52) aufweist.

8. Automatisches Analysegerät gemäß Anspruch 7, wobei die Kanten (52) des Kontaktkörpers (50) nicht parallel zueinander sind.

9. Automatisches Analysegerät gemäß einem der Ansprüche 7 oder 8, wobei der Kontaktkörper (50) als Waschstation für den Nadelkörper (2) der Pipettiervorrichtung (1) ausgestaltet ist.

10. Verwendung einer Pipettiervorrichtung (1) eines Pipettiersystems nach einem der Ansprüche 4 oder 5 zur Justage eines der Pipettiervorrichtung (1) zugeordneten Justagepunktes oder zur Positionierung eines Kontaktkörpers (50) mittels eines dem Kontaktkörper (50) zugeordneten Justagepunktes in einem automatischen Analysegerät.

11. Verwendung einer Pipettiervorrichtung (1) eines Pipettiersystems gemäß Anspruch 10, wobei zur Ermittlung einer ersten Koordinate des Justagepunktes ein Kontaktkörper (50) mit zwei bezüglich einer durch den Justagepunkt führenden Spiegelachse (54) spiegelsymmetrischen Kanten (52) angeordnet wird, der Nadelkörper (2) senkrecht zur Spiegelachse (54) an die beiden Kanten (52) bewegt wird, die jeweiligen Kontaktpunkte ermittelt werden, und die erste Koordinate des Justagepunktes als Mittelpunkt zwischen den beiden Kontaktpunkten ermittelt wird.

12. Verwendung einer Pipettiervorrichtung (1) eines Pipettiersystems gemäß einem der Ansprüche 10 und 11, wobei die Kanten (52) des Kontaktkörpers (50) nicht parallel zueinander sind und die zweite Koordinate des Justagepunktes aus der Geometrie der Kanten (52) und dem Abstand zwischen den beiden Kontaktpunkten ermittelt wird.

## Claims

1. Holder for a pipetting apparatus (1) for an automatic analysis device, the pipetting apparatus (1) comprising a hollow-cylindrical needle body (2), and a fastening body (6) arranged around an axial region of the needle body (2) in order to fasten the needle body (2) on the holder (22) of the automatic analysis device, wherein the fastening body (6) is configured as a conical frustum, the imaginary vertex of which lies in the axis of the hollow-cylindrical needle body (2), wherein the fastening body (6) comprises a holding element (18) extending perpendicularly to the axis of the hollow-cylindrical needle body (2) in order to avoid rotation of the hollow-cylindrical needle body (2) about the needle body axis, the holder (22) comprising an opening (28) for the needle body (2), **characterized in that** the holder (22) has a cavity (26) configured as a conical frustum, the imaginary vertex of which lies in the mid-axis of the opening (28) wherein a recess (32), which is configured in order to receive the holding element (18), is introduced into a lateral surface of the cavity (26).

2. Holder (22) according to Claim 1, wherein the recess (32) is configured in the shape of a wedge.

3. Holder (22) according to one of Claims 1 and 2, having a fixing element formed in order to exert a force in the direction of the opening (28) for the needle, wherein the fixing element is arranged in the region of the base surface of the conical cavity (26) and presses the frustoconically shaped fastening body (6) with the needle in the axial direction into the cavity (26) and therefore fixes it there.

4. Pipetting system comprising a holder (22) according to one of Claims 1 to 3 and a pipetting apparatus (1) for an automatic analysis device, the pipetting apparatus (1) comprising a hollow-cylindrical needle body (2), and a fastening body (6) arranged around an axial region of the needle body (2) in order to fasten the needle body (2) on a holder (22) of the automatic analysis device, wherein the fastening body (6) is configured as a conical frustum, the imaginary vertex of which lies in the axis of the hollow-cylindrical needle body (2) wherein the fastening body (6) comprises a holding element (18) extending perpendicularly to the axis of the hollow-cylindrical needle body (2) in order to avoid rotation of the hollow-cylindrical needle body (2) about the needle body axis.

5. Pipetting system according to Claim 4, wherein the diameter and/or the height of the conical frustrum of the pipetting apparatus (1) is more than three times, preferably more than five times the diameter of the needle body (2).

6. Automatic analysis device having a pipetting system according to one of Claims 4 and 5 or a holder (22) according to one of Claims 1 to 3.

7. Automatic analysis device according to Claim 6, furthermore comprising a contact body (50) for adjusting an assigned adjustment point, the contact body (50) having two edges (52) which are mirror-symmetrical with respect to a mirror axis (54) extending through the adjustment point.

8. Automatic analysis device according to Claim 7, wherein the edges (52) of the contact body (50) are not mutually parallel.

9. Automatic analysis device according to one of Claims 7 and 8, wherein the contact body (50) is configured as a washing station for the needle body (2) of the pipetting apparatus (1).

10. Use of a pipetting apparatus (1) of a pipetting system according to one of Claims 4 and 5 for adjusting an adjustment point assigned to the pipetting apparatus (1) or for positioning a contact body (50) by means of an adjustment point assigned to the contact body (50) in an automatic analysis device.

11. Use of a pipetting apparatus (1) of a pipetting system according to Claim 10, wherein, in order to determine a first coordinate of the adjustment point, a contact body (50) having two edges (52) which are mirror-symmetrical with respect to a mirror axis (54) extending through the adjustment point is arranged, the needle body (2) is moved perpendicularly to the mirror axis (54) onto the two edges (52), the respective contact points are determined, and the first coordinate of the adjustment point is determined as the midpoint between the two contact points.

12. Use of a pipetting apparatus (1) of a pipetting system according to one of Claims 10 and 11, wherein the edges (52) of the contact body (50) are not mutually parallel, and the second coordinate of the adjustment point is determined from the geometry of the edges (52) and the distance between the two contact points.

## Revendications

1. Fixation (22) d'un dispositif (1) de pipetage d'un appareil d'analyse automatique, le dispositif (1) de pipetage comprenant une pièce (2) cylindrique creuse formant aiguille et une pièce (6) de fixation disposée autour d'une partie axiale de la pièce (2) formant aiguille, afin de fixer la pièce (2) formant aiguille à la fixation (22) de l'appareil d'analyse automatique, la pièce (6) de fixation étant conformée en tronc de cône, dont la pointe imaginaire se trouve dans l'axe de la pièce (2) cylindrique creuse formant aiguille, la pièce (6) de fixation ayant un élément (18) de maintien s'étendant perpendiculairement à l'axe de la pièce (2) cylindrique creuse formant aiguille pour empêcher une rotation de la pièce (2) cylindrique creuse formant aiguille autour de l'axe de la pièce formant aiguille, la fixation (22) comprenant une ouverture (28) pour la pièce (2) formant aiguille, **caractérisée en ce que** la fixation (22) a une cavité (26) conformée en tronc de cône, dont la pointe imaginaire est dans l'axe médian de l'ouverture (28), un évidement (32), conformé pour recevoir l'élément (18) de maintien, étant ménagé sur une surface latérale de la cavité (26).

2. Fixation (22) suivant la revendication 1, dans lequel l'évidement (32) est cunéiforme.

3. Fixation (22) suivant l'une des revendications 1 ou 2, comprenant un élément d'immobilisation constitué pour appliquer une force en direction de l'ouverture (28) pour l'aiguille, l'élément d'immobilisation étant disposé dans la région de la surface de base de la cavité (16) conique et poussant la pièce (6) de fixation tronconique avec l'aiguille en direction axiale dans la cavité (26) et ainsi l'y immobilisant.

4. Système de pipetage comprenant une fixation (22) suivant l'une des revendications 1 à 3 et un dispositif (1) de pipetage d'un appareil d'analyse automatique, le dispositif (1) de pipetage comprenant une pièce (2) cylindrique creuse formant aiguille et une pièce (6) de fixation disposée autour d'une partie axiale de la pièce (2) formant aiguille, afin de fixer la pièce (2) formant aiguille à la fixation (22) de l'appareil d'analyse automatique, la pièce (6) de fixation étant conformée en tronc de cône, dont la pointe imaginaire se trouve dans l'axe de la pièce (2) cylindrique creuse formant aiguille, la pièce (6) de fixation ayant un élément (18) de maintien s'étendant perpendiculairement à l'axe de la pièce (2) cylindrique creuse formant aiguille pour empêcher une rotation de la pièce (2) cylindrique creuse formant aiguille autour de l'axe de la pièce formant aiguille.

5. Système de pipetage suivant la revendication 4, dans lequel le diamètre et/ou la hauteur du tronc de cône du dispositif (1) de pipetage est plus grand que le triple, de préférence plus grand que le quintuple, du diamètre de la pièce (2) formant aiguille.

6. Appareil d'analyse automatique ayant un système de pipetage suivant l'une des revendications 4 ou 5 ou une fixation (22) suivant l'une des revendications 1 à 3.

7. Appareil d'analyse automatique suivant la revendication 6, comprenant, en outre, une pièce (50) de contact pour ajuster un point d'ajustement associé, la pièce (5) de contact ayant deux bords (52) symétriques comme en un miroir par rapport à un axe (54) de symétrie passant par le point d'ajustement.

8. Appareil d'analyse automatique suivant la revendication 7, dans lequel les bords (52) de la pièce (50) de contact ne sont pas parallèles entre eux.

9. Appareil d'analyse automatique suivant l'une des revendications 7 ou 8, dans lequel la pièce (50) de contact est conformée en poste de lavage de la pièce (2) formant aiguille du dispositif (1) de pipetage.

10. Utilisation d'un dispositif (1) de pipetage d'un système de pipetage suivant l'une des revendications 4 ou 5, pour ajuster un point d'ajustement associé au dispositif (1) de pipetage ou pour la mise en position d'une pièce (50) de contact au moyen d'un point d'ajustement associé à la pièce (50) de contact dans un appareil d'analyse automatique.

11. Utilisation d'un dispositif (1) de pipetage d'un système de pipetage suivant la revendication 10, dans lequel, pour la détermination d'une première coordonnée du point d'ajustement, on dispose une pièce (50) de contact, ayant deux bords (52) symétriques comme en un miroir par rapport à un axe (54) de symétrie comme en un miroir passant par le point d'ajustement, on déplace la pièce (2) formant aiguille perpendiculairement à l'axe (54) de symétrie sur les deux bords (52), on détermine les points de contact respectifs et on détermine la première coordonnée du point d'ajustement comme point médian entre les deux points de contact.

12. Utilisation d'un dispositif (1) de pipetage d'un système de pipetage suivant l'une des revendications 10 et 11, dans lequel les bords (52) de la pièce (50) de contact ne sont pas parallèles entre eux et on détermine la deuxième coordonnée du point d'ajustement à partir de la géométrie des bords (52) et de la distance entre les deux points de contact.
